# EUROPEAN PATENT APPLICATION

(11) **EP 1 612 743 A2**
(43) Date of publication of application: **04.01.2006**
(21) Application number: 05013679.5
(22) Date of filing: 24.06.2005
(51) Int. Cl.: G07D 7/00

(54) **Method and system for providing a document which can be visually authenticated**

(30) Priority: 24.06.2004 US 582649 P; 23.11.2004 US 996015
(71) Applicant: Brady Worldwide, Inc., Milwaukee, WI 53209 (US)
(72) Inventor: Haas, David J., Suffern, NY 10901 (US); Holt, Robert J., Cornwall, NY 12518 (US)
(74) Representative: Jung HML

(57) **Abstract**

A method of providing a document which can be visually authenticated includes providing a document that is valid for a predetermined period of validity; randomly selecting visual authentication indicia just prior to the period of validity, the visual authentication indicia providing visual indication of validity during the period of validity; and transferring the visual authentication indicia to the document to visually authenticate the validity of the document during the period of validity. The method can be implemented using a system for creating a document which can be visually authenticated disclosed herein. The system includes a plurality of possible visual authentication indicia; a computer capable of executing instructions for randomly selecting one of the plurality of possible visual authentication indicia just prior to a predetermined period of validity; and at least one document validation station for transferring the selected visual authentication indicia to a document to visually authenticate the validity of the document during the period of validity.

## Description

### CROSS REFERENCES TO RELATED APPLICATIONS

This application claims the priority benefit of U.S. Provisional Patent Application No. 60/582,649 filed on June 24, 2004.

### STATEMENT REGARDING FEDERALLY SPONSORED RESEARCH

Not Applicable.

### TECHNICAL FIELD

This invention relates to document authentication, and in particular to a method and system for providing a document which can be visually authenticated using randomly generated visual authentication indicia.

### DESCRIPTION OF THE BACKGROUND ART

Documents, such as badges, passes, tickets, and the like are often printed for use during a specific, or predetermined, period of time, such as an hour, a day, a month, a year, and the like. Authenticating the validity of the document to determine whether the document bearer is authorized to pass a check point, receive goods, and the like, is required to ensure the document is not counterfeit. Quickly authenticating the document is often necessary to minimize disturbing the document bearer and maintain order in a high traffic or crowded environment.

Often the period of time the document is valid is printed directly on the document, along with the date the document was printed, and if the document is valid for a single day, the date the document is valid. Serial numbers printed on the document can also be used to confirm document authenticity. Unfortunately, printed alphanumeric characters, such as a date or serial number printed on a document must be read and interpreted before authenticity of the document can be confirmed. Serial numbers and the time and date constantly change. Each time an individual reads the alphanumeric characters on a document, the individual must execute a complicated decision process to determine whether the document bearing the alphanumeric characters is authentic. In other words, the individual must confirm in their mind that the time and date are within allowable values and/or the serial number printed on the document falls within a prescribed range which was provided at the beginning of the validity period.

The printed matter on the document may be sufficient when an authorized person, such as a security guard, receptionist, ticket taker, and the like, can examine the document up close and read the printed matter and verify that the document is valid. Even higher security may require that the printed matter is printed on security paper or special paper forms so that the authenticity of the document can also be verified by the texture or feel of the document.

In many situations, however, printed documents cannot be examined closely to determine the validity of the document. For example, in a high traffic area, a security guard may not have the time to read, much less feel, every badge worn by everyone passing a particular check point. Moreover, many documents are printed digitally by computer. With a wide variety of fonts available today, it is difficult to distinguish letters and numbers from a distance.

One method for authenticating a document from a distance includes a color coding system. A color coding system requires creating a document on different colored paper each validity period. Unfortunately, a color coding system has several disadvantages. In a typical color coding system used for badges that are valid for a single day, five to thirty one different colored badge stocks are required. The inventory stock for each badge color must be maintained. The colors used for a particular day must be determined well in advance of the day of use in order to ensure the correct color badge stock is available at every location issuing badges. Although, the selection of the color for a particular day may appear random to an occasional user, a set pattern of use is often developed that can be detected by a determined counterfeiter.

The color coding system does provide authentication of a badge from a distance at the expense of an expensive support system and providing counterfeiters with the opportunity to determine the color selected well in advance of the day the color will be used. Moreover, since individuals preferably look at the color to authenticate the badge, as opposed to reading the text printed on the badge, using a color coding system reduces the likelihood of detecting incorrect or expired data on the badge.

### SUMMARY OF THE INVENTION

The present invention provides a method of providing a document which can be visually authenticated without relying on conventional predictable dates, or other predictable indicia. The method includes providing a document that is valid for a predetermined period of validity; randomly selecting visual authentication indicia just prior to the period of validity, the visual authentication indicia providing visual indication of validity during the period of validity; and transferring the visual authentication indicia to the document to visually authenticate the validity of the document during the period of validity.

The method can be implemented using a system disclosed herein for creating a document which can be visually authenticated. The system includes a plurality of possible visual authentication indicia; a computer capable of executing instructions for randomly selecting one of the possible visual authentication indicia just prior to a predetermined period of validity; and at least one document validation station for transferring the selected visual authentication indicia to a document to visually authenticate the validity of the document during the period of validity.

A general objective of the present invention is to provide a document that can be authenticated quickly and easily during a period in which the document is valid. This objective is accomplished by randomly selecting visual authentication indicia just prior to the period of validity, the selected visual authentication indicia providing visual indication of validity during the period of validity, and transferring the selected visual authentication indicia to the document to visually authenticate the validity of the document during the period of validity.

The foregoing and other objectives and advantages of the invention will appear from the following description. In the description, reference is made to the accompanying drawings which form a part hereof, and in which there is shown by way of illustration a preferred embodiment of the invention. Such embodiment does not necessarily represent the full scope of the invention, however, and reference is made therefore to the claims herein for interpreting the scope of the invention.

### BRIEF SUMMARY OF THE DRAWINGS

Fig. 1 is a block representation of a system incorporating the present invention for creating a document which can be visually authenticated;

Fig. 2 is a document created using a method performed by the system of Fig. 1 for creating a document which can be visually authenticated;

Fig. 3 is a sample collection of images that can be used as visual authentication indicia in the method of Fig. 2;

Fig. 4 is an access control card for use in an embodiment of the present invention; and

Fig. 5 is a secure access point in a facility incorporating an embodiment of the present invention.

### DETAILED DESCRIPTION OF THE PREFERRED EMBODIMENTS

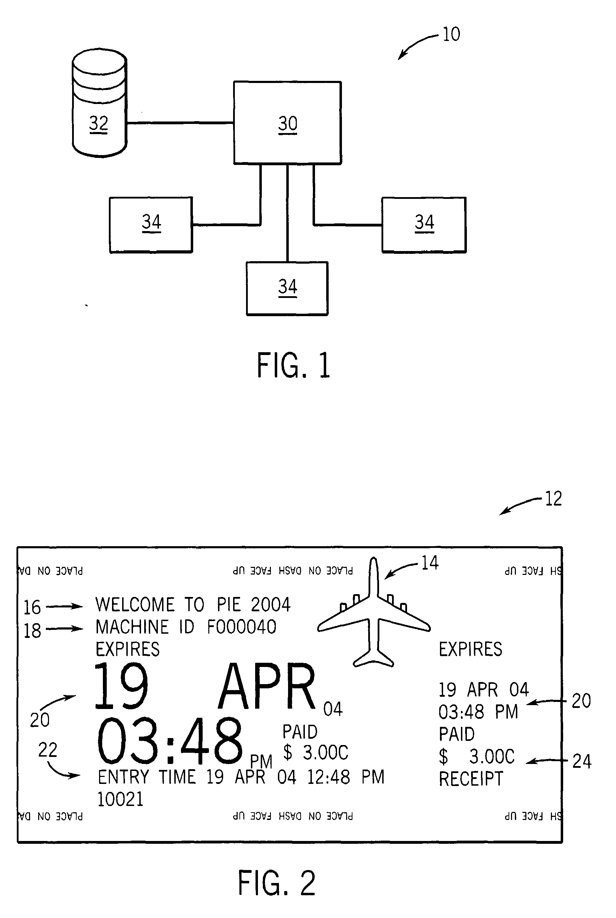

Referring to Figs. 1 and 2, a document authentication system 10 incorporating the present invention produces a document 12 including visual authentication indicia 14 that is transferred thereto for display. The visual authentication indicia 14 provides visual evidence that the document 12 is valid for a predetermined period of validity. Advantageously, the visual authentication indicia 14 is randomly selected just prior to the period of validity in order to minimize counterfeiting of the document 12.

The document 12 to which the visual authentication indicia 14 is transferred can be any object on which a visual image can be displayed. The document 12 can include any single use or multi-use media capable of actively or passively displaying the visual authentication indicia 14. Single use media includes paper, fabric, plastic, and the like, that is coated or uncoated. One example of a coated single use media is paper coated with photochromic materials which when exposed to specific light frequencies changes color to produce an image. Multi-use media includes any media on which an image can be written and rewritten, such as rewriteable media and electronic displays.

Rewriteable media includes reversible heat-sensitive media, such as disclosed in U.S. Patent Nos. 5,489,494 and 6,572,021, electronic paper, such as disclosed in U.S. Patent Nos. 5,389,945 and 6,670,981, and the like. Electronic displays include any display that has circuitry to receive and visually display the visual authentication indicia 14, such as an LCD, LED, and color matrix displays. If electronic media such as an electronic display or electronic paper is used, the document 12 can include an internal power source, such as a battery, or receive power to activate the electronic media as the visual authentication indicia 14 is transferred to the document 12, without departing from the scope of the invention.

In preferred embodiments, the document 12 is a single use or reimage badge for security identification use. Reimage badges, such as disclosed in U.S. Patent Nos. 5,489,494 and 6,572,021 and which are fully incorporated herein by reference, may include rewriteable thermal paper that allows visual authentication indicia 14 to be rewritten in place of existing and expired visual authentication indicia 14. Although a document 12 in the form of a badge is preferred, the term "document" used herein means any object on which the randomly selected visual authentication indicia 14 can be displayed. For example, a document 12 which must be authenticated to verify that a vehicle is authorized to be parked in a parking lot can be a license plate, hangtag, sticker, contactless proximity chip, or even the vehicle itself, without departing from the scope of the invention..

The visual authentication indicia 14 can be any recognizable pattern. The recognizeable pattern can be one or more images and/or the spatial relationship of an image relative to the document 12 being authenticated or other indicia on the document. For example, the recognizeable pattern can be a single image having a particular shape, orientation, and/or size, two or more images in a particular spatial relationship, a single image in a particular position and/or location on the document, and the like.

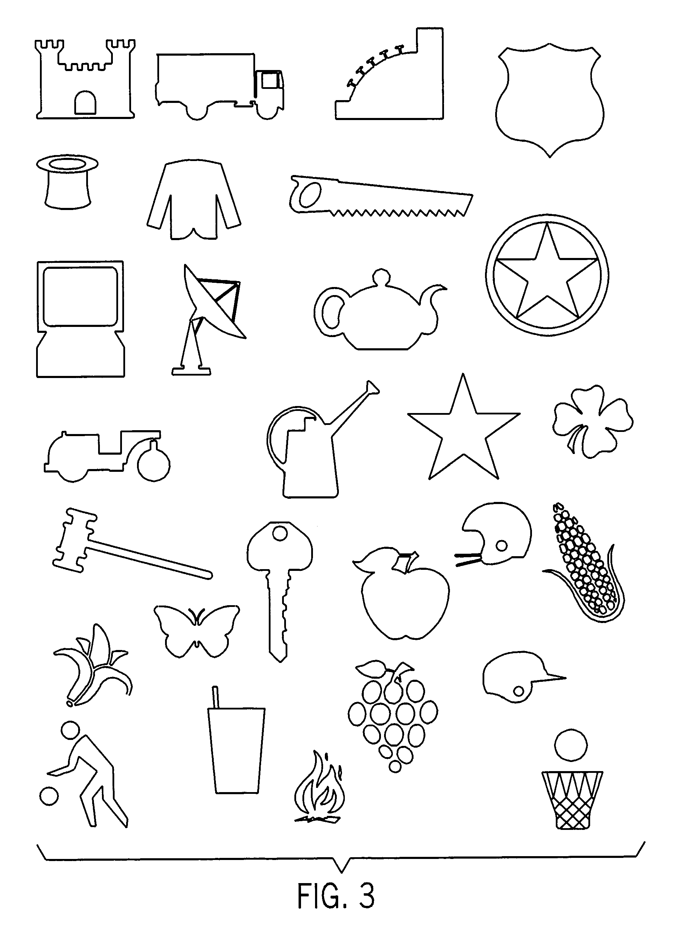

Visual authentication indicia 14 that are human recognizable and easily described between people as a "language word" are preferable. Solid symbols or silhouettes are more easily recognizable close up or from a distance than line or outline drawings. Examples of visual authentication indicia 14 that can be used include 1) text words (code words) of any language, such as "we," "house," "plant," and the like; 2) numbers in random or serial formats; 3) proper names such as "John," "Bill," "Abigail," and the like; 4) uniform background patterns, such as dots, dashes, lines, and the like; 5) non-uniform background patterns, such as random sized dots, and the like; 6) images, such as a car, ace, sun, and the like. In most applications, the preferred visual authentication indicia 14 is an easily recognizable common image, such as one of the images shown in Fig. 3.

In an embodiment disclosed in Fig. 2, the document 12 is a pass, such as a badge, parking permit, and the like, with visual authentication indicia 14 in the form of an airplane printed thereon. Additional information can be provided on the document 12, such as event text 16 identifying the event for which the document 12 is used, issuing station identifying text 18 identifying the specific printer, or other device, that transferred the information to the document 12, an expiration date and time 20, an entry date and time 22, and an amount 24 paid by the document bearer, and the like, without departing from the scope of the invention. Of course additional information can be imprinted or included on the document 12, such as a picture and name of the document bearer, a bar code, and the like, without departing from the scope of the invention. Moreover, only the visual authentication indicia 14 need be visibly present on the document 12 to fall within the scope of the claims. Moreover, although visual identification indicia 14 which is always visible to the human eye is preferred, the visual identification indicia 14 transferred to the document 12 can be visible to a human eye and/or an optical scanner only upon illumination under certain light spectrums, such as under ultraviolet or infrared light, without departing from the scope of the invention.

Most preferably the visual authentication indicia 14 is sized, such that it is visible from a distance of approximately 2-4 meters which allows a security guard, and other personnel, to recognize the document 12 bearing the visual authentication indicia 14 as authentic. In one embodiment, the visual authentication indicia 14 is printed on a white document using black ink to enhance visibility and eliminate the need to ensure the proper color ink is available at all locations the document 12 can be validated. Of course, reverse printing, such as white on black, printing in a color, and the like, can also be used to create the visual authentication indicia 14 on the document 12 without departing from the scope of the invention.

Advantageously, the visual authentication indicia 14 is more easily recognizable in difficult-to-read locations than text. For example, parking receipts are frequently placed on the dashboard of automobiles which requires an enforcement officer to bend over within a few inches of a windshield glass to clearly read an expiration date printed on the parking receipt. The visual authentication indicia 14, described herein, is more easily viewed from a greater distance and can be interpreted with fewer reading errors than reading the expiration date printed in small text. Accordingly, in addition to being a security measure, incorporating the visual authentication indicia 14 into a document, such as a parking receipt, can increase productivity, provide greater revenue for the user, and improve human factor engineering.

Importantly, the visual authentication indicia 14 is randomly determined just prior to the beginning of the validity period, such that no one will know what the selected visual authentication indicia 14 will be prior to the validity period. The randomness of the visual authentication indicia 14 can also reside in the size, image location, or orientation of the image on the document 12. In other words, if an image is used, the image can be the same image used during the prior period of validity with the size, location, or orientation of the image on the document 12 being randomly selected just prior to the beginning of the next validity period.

Just prior to the beginning of the validity period can be any period of time in which producing the visual authentication indicia 14 on a counterfeit document prior to the period of validity is not feasible. In some applications, just prior to the beginning of the validity period is the period of time necessary for anyone to determine the visual authentication indicia 14 prior to the period of validity. For example, if the time period necessary for anyone to determine the visual authentication indicia 14 once the visual authentication indicia 14 is selected is fifteen minutes, just prior to the beginning of the validity period is fifteen minutes, since no one will be able to determine the visual authentication indicia 14 until the period of validity if the visual authentication indicia 14 is selected in fifteen minutes or less prior to the period of validity.

The period of validity cannot start prior to the selection and disclosure of the visual authentication indicia 14. However, the period of validity can be any period of time, such as hours, days, or weeks, and is dependent upon the purpose, or use, of the document 12. For example, a document, such as a security pass, used to gain entry into a sensitive secure area may have a shorter period of validity than a lift ticket used to gain access to a ski lift at a ski hill where changing the visual authentication indicia on a daily basis may be sufficient. Preferably, the period of validity is sufficiently short, such that creating a counterfeit document bearing the visual authentication indicia 14 is not worth the effort.

The visual authentication indicia 14 is transferred to the document 12 using any methods known in the art which produces an image that can be viewed to authenticate the document 12. In the preferred embodiment, the visual authentication indicia 14 is printed on the document 12 using any known printer that can produce an image on the document 12. Although printing is preferred, the visual authentication indicia 14 can be transferred to the document 12 by forming or creating, such as by printing, the visual authentication indicia 14 on an adhesive backed label which is then adhesively secured to the document 12. Of course, other methods of transferring the visual authentication indicia 14 to the document 12, or adhesive backed label, including etching, imprinting, stamping, engraving, embossing, heating, illuminating, electronically transmitting, and the like, can be used without departing from the scope of the invention.

The system 10 can be implemented by a computer 30 that randomly selects the visual authentication indicia 14 just prior to the period of validity. The computer 30 can be any computer known in the art having a central processing unit (CPU) that can execute a computer program that randomly selects the visual authentication indicia 14. Preferably, the computer 30 includes storage media 32, such as a hard drive, for electronically storing one or more computer programs and one or more databases. In addition, in the preferred embodiment, the computer includes hardware that allows the CPU to communicate with external devices, such as other computers and document validation stations 34, through a network card or modem.

The visual authentication indicia 14 is randomly selected from a database of possible visual authentication indicia, such as shown in Fig. 3, electronically stored on the storage media 32 using a random number generator program executed by the CPU. Any random number generator program known in the art can be used. Each image in the database is assigned a number. The random number generator program randomly selects a number associated with an image in the database. The image associated with the randomly selected number is then designated the visual authentication indicia 14 for the next period of validity.

In the embodiment shown in Figs. 1 and 2, the computer 30 is networked with a plurality of document validation stations 34. Each document validation station 34 can transfer the visual authentication indicia 14 to the document 12. Preferably, once the visual authentication indicia 14 has been selected for the validity period, the selection is downloaded to all of the document validation stations 34 simultaneously, such that all of the document validation stations 34 receive the visual authentication indicia 14 at the same time at the beginning of the validity period.

The particular type of document validation station 34 is dependent upon the document 12 upon which the visual authentication indicia 14 is transferred. If the document 12 is a single use badge formed from paper, the document validation station 34 can be any device that is capable of transferring the visual authentication indicia 14 onto paper, or other media. For example, the document validation station 34 can be any type of printer, such as an impact printer, ink-jet printer, thermal transfer printer, laser printer, and the like, or other device, such as a laser that heats the document to deform or change the document color to transfer the visual authentication indicia 14 to the document 12. On the other hand, if the document 12 is a rewritable badge, the document validation station 34 includes an apparatus, such as a laser, capable of writing on the rewritable media forming at least part of the badge in order to transfer the visual authentication indicia 14 thereon. Of course, if the document 12 includes an electronic display for displaying the visual authentication indicia 14, the document validation station 34 can be an electronic device that electronically transmits the visual authentication indicia 14 by electrically connecting to circuitry in the document 12 either physically or via radio waves. Of course, if the visual authentication indicia 14 is electronically transferred to the document 12, the electronic transfer can be encrypted to prevent unauthorized personnel from intercepting the transfer for use on unauthorized documents. Advantageously, the document validation station 34 can also provide power to actuate the electronic display if the document 12 does not include an internal power source.

In a preferred embodiment, the visual authentication indicia 14 is printed on the document 12 using a single color ink, such as blue or black ink. Advantageously, the printing visual authentication indicia 14 onto the document 12 with a printer using the single color ink reduces the cost of validating the document 12 while increasing security over a color-coding system. For example, if the period of validity is one day, since the randomly selected visual authentication indicia 14 is new each day, it is equivalent to having 365 different color coded documents without the cost of ordering and stocking 365 different color documents.

In another embodiment of the present invention, the randomly selected visual authentication indicia 14, or additional visual authentication indicia, visually verifies the bearer of the document 12 is authorized to access a specific location, as opposed to merely verifying the authenticity of the document 12. For example, a badge bearing visual authentication indicia 14, such as an image of a car, can be visually verified as authentic to identify the bearer as someone authorized to access a specific place of validity, such as common areas of a building.

Additional visual authentication indicia 14, such as an image of an airplane, on the same badge can be used to visually verify that the bearer is authorized to access other places of validity, such as specific restricted areas of the same building. Of course, different visual authentication indicia 14 used during the same period of validity can be used to visually verify both the authenticity of the document 12 and the bearers authorization to access different places of validity without departing from the scope of the invention.

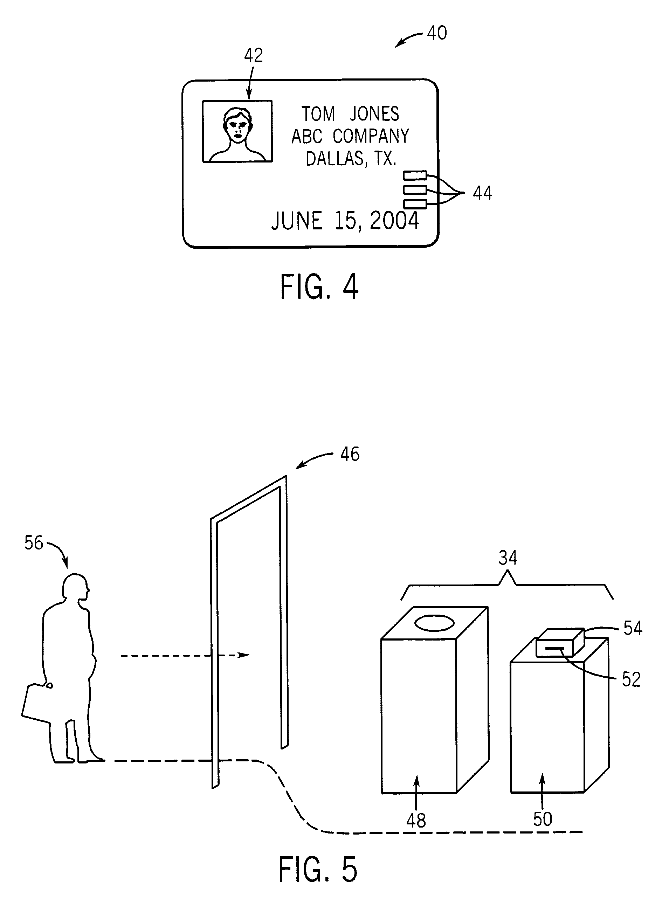

In one embodiment shown in Figs. 4 and 5 with reference to Figs. 1 and 2, a document 12, in the form of a badge, displaying the visual identification indicia 14 can be reimaged by the document validation station 34 only upon the presentation and verification of an access control card 40. The document 12 is reimaged when the visual identification indicia 14 for the current period of validity is transferred to the document 12 and displayed. The access control card 40 can form part of the document 12, or be a separate document or card 40 such as shown in Fig. 4, that identifies the bearer electronically. The access control card shown in Fig. 4 includes electrical contacts 44 for electrically connecting to the computer 30 which verifies access control card 40. Of course, the access control card 40 can be electronically verified using other methods known in the art, such as by communicating to RFID circuitry on the access control card 40 via radio waves, and/or visually verified by displaying a photograph 42 and other identifying information of the bearer.

In this embodiment, only one document 12 is reimaged for each verification of an access control card 40 per each period of validity, and the document 12 is reimaged within a predetermined amount of time, such as five seconds, beginning upon verification of the access control card 40. Advantageously, by limiting the amount of time that the document 12 can be reimaged, an unauthorized person cannot substitute the document 12 associated with the owner of the valid access control card 40 with a document associated with the unauthorized user.

In use, an authorized person 56 passes through a secure access point in a facility by passing through a metal detector 46. The document validation station 34 includes a card reader 48 and a reimage device 50. The authorized person verifies the access control card 40 at the card reader 48, and reimages the document 12 using the reimage device 50 within the predetermined amount of time.

In this embodiment, the reimage device 50 includes a slot 52 formed in a housing 54. The housing 54 encloses a mechanism (not shown), such as a printer, laser, RFID reader/writer, and the like, that transfers the visual identification indicia 14, to the document 12. The authorized person 56 reimages the document 12 by inserting the document into the slot 52 formed in the housing 54, and the mechanism transfers the visual authentication indicia 14 to the document 12. Advantageously, if the document 12 forms part of the access control card 40 that is electronically verified through the use of an RFID reader or the electrical contacts 44, and the mechanism is an RFID reader/writer or transfers data via the electrical contacts 44, the mechanism can verify the access control card 40 and reimage the document 12 simply by inserting the document 12 into the slot 52, and a separate card reader is not necessary. Of course, if the visual authentication indicia 14 is electronically transmitted to the document 12, additional identifying information can also be transferred to memory contained within circuitry of the document 12 to further enhance the security of the document.

The present invention can be used in a variety of applications including employee ID badges, disposable visitor ID badges, admission passes and tickets, food freshness indicators, parking hangtags and permits, inspection and verification stickers, and transportation seat checks and transfer passes. Of course, the present invention is not limited to the above described applications, and one skilled in the art will be able to incorporate the present invention into other applications that fall within the scope of the claims. Moreover, while there has been shown and described what is at present considered the preferred embodiment of the invention, it will be obvious to those skilled in the art that various changes and modifications can be made therein without departing from the scope of the invention defined by the appended claims.
In summary the inventions provides for a method of providing a document which can be visually authenticated including providing a document that is valid for a predetermined period of validity; randomly selecting visual authentication indicia just prior to the period of validity, the visual authentication indicia providing visual indication of validity during the period of validity; and transferring the visual authentication indicia to the document to visually authenticate the validity of the document during the period of validity. The method can be implemented using a system for creating a document which can be visually authenticated disclosed herein. The system includes a plurality of possible visual authentication indicia; a computer capable of executing instructions for randomly selecting one of the plurality of possible visual authentication indicia just prior to a predetermined period of validity; and at least one document validation station for transferring the selected visual authentication indicia to a document to visually authenticate the validity of the document during the period of validity.

## Claims

1. A method of providing a document which can be visually authenticated, said method comprising:
providing a document that is valid for a predetermined period of validity;
randomly selecting visual authentication indicia just prior to said period of validity, said visual authentication indicia providing visual indication of validity during said period of validity; and
transferring said visual authentication indicia to said document to visually authenticate the validity of said document during said period of validity.

2. The method as in claim 1, in which said visual authentication indicia is transferred to said document by printing directly onto said document.

3. The method as in claim 1 or 2, in which said document includes multi-use media, and said visual authentication indicia is displayed on said multi-use media.

4. The method as in claim 1, 2 or 3, in which randomly selecting said visual authentication indicia is performed by a computer.

5. The method as in claim 4, in which said computer is in communication with at least one document validation station, and said visual authentication indicia is communicated to said at least one document validation station for transferring said visual authentication indicia to said document at the beginning of said period of validity.

6. The method as in claim 4, in which said computer is in communication with a plurality of document validation stations, and said visual authentication indicia is communicated to said plurality of document validation stations simultaneously, such that all of said document validation stations receive the visual authentication indicia at the same time at the beginning of said period of validity.

7. The method as in one of claims 1 to 6, in which said visual authentication indicia can be authenticated from a distance of approximately 2 to 4 meters.

8. The method as in one of claims 1 to 7, in which said visual authentication indicia is transferred to said document using a process selected from the group consisting of printing, etching, imprinting, stamping, engraving, embossing, heating, illuminating, and electronically transmitting.

9. The method as in one of claims 1 to 8, in which said document includes an electronic display.

10. The method as in one of claims 1 to 9, in which said visual identification indicia is transferred to said document after presentation of a valid access control card.

11. The method as in claim 10, in which said visual identification indicia is transferable to said document only a predetermined amount of time after presentation of a valid access control card.

12. The method as in claim 10 in which said valid access control card forms part of said document.

13. The method as in one of claims 1 to 12, in which said visual identification indicia is visible under at least one of a visible light spectrum, infrared light spectrum, and ultraviolet light spectrum.

14. A system for creating a document which can be visually authenticated, said system comprising:
a plurality of possible visual authentication indicia;
a computer capable of executing instructions for randomly selecting one of said plurality of possible visual authentication indicia just prior to a predetermined period of validity; and
at least one document validation station for transferring said selected visual authentication indicia to a document to visually authenticate the validity of said document during said period of validity.

15. The system as in claim 14, in which said selected visual authentication indicia is transferred to said document by said document validation station printing directly onto said document.

16. The system as in claim 14 or 15, in which said document includes rewritable media, and said selected visual authentication indicia is transferred to said document by said document validation station forming said selected visual authentication indicia in said rewritable media.

17. The system as in claim 14, 15 or 16, in which said computer is in communication with said at least one document validation station, and said selected visual authentication indicia is communicated to said at least one document validation station for transferring said selected visual authentication indicia to said document at the beginning of said period of validity.

18. The system as in one of claims 14 to 17, in which said computer is in communication with a plurality of document validation stations, and said selected visual authentication indicia is communicated to said plurality of document validation stations simultaneously, such that all of said document validation stations receive the selected visual authentication indicia at the same time at the beginning of said period of validity.

19. The system as in one of claims 14 to 18, in which said selected visual authentication indicia can be authenticated from a distance of approximately 2 to 4 meters.

20. The system as in one of claims 14 to 19, in which said plurality of possible visual authentication indicia are in the form of a database of images stored on storage media accessible by said computer.

21. The system as in one of claims 14 to 20, in which said document validation station transfers said visual authentication indicia to said document using a process selected from the group consisting of printing, etching, imprinting, stamping, engraving, embossing, heating, illuminating, and electronically transmitting.

22. The system as in one of claims 14 to 21, in which said document validation station includes means for verifying the identity of a bearer of said document to which the visual identification indicia is transferred.

23. The system as in one of claims 14 to 22, in which said visual identification indicia transferred to the document by the document validation station is visible under at least one of a visible light spectrum, infrared light spectrum, and ultraviolet light spectrum.
